# EUROPEAN PATENT APPLICATION

(11) **EP 4 564 192 A1**
(43) Date of publication of application: **04.06.2025**
(21) Application number: 23212799.3
(22) Date of filing: 28.11.2023
(51) Int. Cl.: G06F 16/51, G06F 16/58, G06N 3/00

(54) **GENERATIVE AI FINGERPRINTING**

(71) Applicant: Nagravision Sarl, 1033 Cheseaux-sur-Lausanne (CH)
(72) Inventor: MARTY, Renaud, 1033 Cheseaux-sur-Lausanne (CH); BERKES, Pietro, 1033 Cheseaux-sur-Lausanne (CH)
(74) Representative: Ipside

(57) **Abstract**

A generative artificial intelligence (AI) may be trained using a training set of training elements comprising descriptions and images. The generative AI may comprise a number of layers of neurons. The output values generated at an intermediate layer may be highly predictive of the contents of the image that will be generated by the output layer. A provider of a generative AI may wish to prevent certain images from being generated. A codebook of fingerprints may be created, with each fingerprint representing the output values of one or more intermediate layers of a generative AI when the generative AI is in the process of generating a forbidden image. During image generation, a fingerprint of the image being generated is compared to the fingerprints in the codebook. If the fingerprints match, corrective action may be taken.

## Description

### FIELD

The embodiments discussed herein are related to generative artificial intelligence (AI). Specifically, the present disclosure addresses systems and methods to improve the utility of generative AI for generating images by controlling when the generative AI is permitted to create images similar to licensed works.

### BACKGROUND

Generative AI models for generating images from text are trained using a large set of training images and their corresponding text descriptions. The trained model can be used to generate images in response to a description of the image to be generated. Other combinations of input and output may be used. For example, the output may be video, audio, or text and the input may be images, video, or audio. Thus, a Generative AI model for generating video from audio is trained using a large set of training videos and their corresponding audio descriptions.

Generative AI models that are trained using copyrighted images may generate images that use components of those copyrighted images or are very similar to the copyrighted images. If the generation of infringing images is not desired, the copyrighted images are excluded from the training set used for training.

### BRIEF DESCRIPTION OF THE DRAWINGS

Example embodiments will be described and explained with additional specificity and detail through the use of the accompanying drawings.
FIG. 1 is a network diagram illustrating a network environment suitable for generative AI fingerprinting, according to some example embodiments.
FIG. 2 is a block diagram of a generative AI system, according to some example embodiments, suitable for generative AI fingerprinting.
FIG. 3 is a diagram illustrating a neural network, according to some example embodiments.
FIG. 4 is a diagram showing data and components for generative AI that generates an image from a text prompt, according to some example embodiments.
FIG. 5 is a diagram showing data and components for generative AI that generates an image from an image, according to some example embodiments.
FIG. 6 is a diagram showing data and components for a neural network that determines a classification for a fingerprint, according to some example embodiments.
FIG. 7 is a block diagram illustrating a database schema suitable for use in generative AI fingerprinting, according to some example embodiments.
FIG. 8 is a flowchart illustrating operations of a method suitable for modifying output of generative AI based on fingerprints, according to some example embodiments.
FIG. 9 is a flowchart illustrating operations of a method suitable for modifying input prompts to generative AI based on fingerprints, according to some example embodiments.
FIG. 10 is a flowchart illustrating operations of a method suitable for training a machine learning model to recognize fingerprints that identify that a generative model will generate a protected image, according to some example embodiments.
FIG. 11 illustrates a diagrammatic representation of a machine in an example form of a computing device within which a set of instructions, for causing the machine to perform any one or more of the methods discussed herein, may be executed.

### DETAILED DESCRIPTION OF THE DRAWINGS

Aspects of the disclosure provide systems and methods to fingerprint images (and other output) of generative AI. A machine-learning model (also referred to herein as an AI) may be trained using a training set comprising labeled or annotated inputs. For example, a generative AI may be trained to produce images based on image descriptions by providing training elements comprising descriptions (inputs) and images (labels). As another example, a generative AI may be trained to produce video based on one or more input images by providing training elements comprising images (inputs) and videos (labels). After training on a large number of input/label pairs (e.g., millions, billions, or trillions of input/label pairs), the generative AI is able to generate new images in response to description inputs.

As used herein, the term "label" refers to whatever is being generated or predicted by the machine-learning model. For example, a machine-learning model that predicts electricity consumption based on historical weather data would be trained on training elements comprising historical weather data (inputs) and electricity consumption (labels). The label may be a word, a sentence, a paragraph, an image, multiple images, a video, a voice audio clip, a music audio clip, or any suitable combination thereof.

The machine-learning model may comprise a number of layers of neurons. A representation of the input is provided to the first layer of neurons. The neurons of the first layer (also referred to as the input layer) generate output values that are provided to one or more further layers and so on. The output values of the final layer of neurons (also referred to as the output layer) are the output of the machine-learning model.

In the example of an image-generating AI that operates on a text input, the input is a representation of text and the output is an image. The output values generated at an intermediate layer may be highly predictive of the contents of the image that will be generated by the output layer. Earlier layers of the machine-learning model may have output values that vary substantially and thus are less useful for predicting the final output. For example, the text prompts "large rodent" and "capybara" may have substantially different representations in the layers immediately following the input layer, but generate similar images. In alternative embodiments, the input may be video, an image, or audio.

A provider of a generative AI may wish to prevent certain images from being generated. For example, some generated images, videos, or music may infringe copyright. As another example, it may be undesirable to generate adult content.

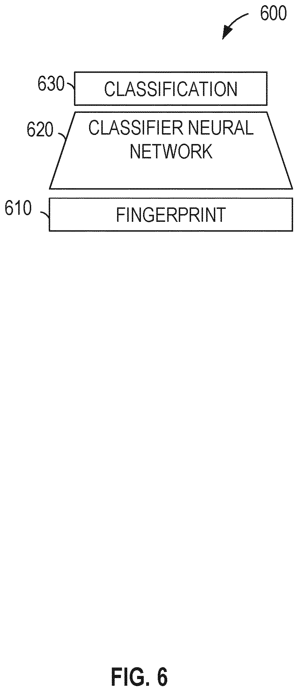

A codebook of fingerprints may be created, with each fingerprint representing the output values of one or more intermediate layers of a generative AI when the generative AI is in the process of generating a forbidden image. During image generation, a fingerprint of the image being generated (e.g., the output values of the one or more intermediate layers of the generative AI) is compared to the fingerprints in the codebook. The generative AI may be paused while the fingerprints are compared or allowed to proceed in parallel. If the fingerprints match, corrective action may be taken. Determining that two fingerprints "match" may be performed using a machine-learning model (see FIG. 6), by determining a difference measure for the two fingerprints and comparing the difference measure to a predetermined threshold that may vary in different embodiments, or in various other ways. In some example embodiments, fingerprints match only if they are identical. In other example embodiments, fingerprints match if they differ by less than 1%, by less than 5%, or by less than 10%.

The corrective action may be as simple as preventing the image from being generated and asking a user to provide a different prompt. Alternatively, the process of propagating values from one layer to another of the generative AI may be interrupted and the values modified to decrease the similarity of the fingerprints. Using the modified values, the generative AI proceeds to generate an image that is less similar to the forbidden image.

In some example embodiments, the generative AI is allowed to generate the image even though the fingerprint matches a fingerprint in the codebook. For example, an output image that is similar to a copyrighted image may be produced if the user has a license to the copyrighted image.

Using the systems and methods described herein, the technological system for generative AI is improved by giving generative AI providers greater control over the output generated by a generative AI. Compared to systems that compare the output of a generative AI with a library of images, using the fingerprints reduces computational complexity and increases the success rate of detecting forbidden outputs.

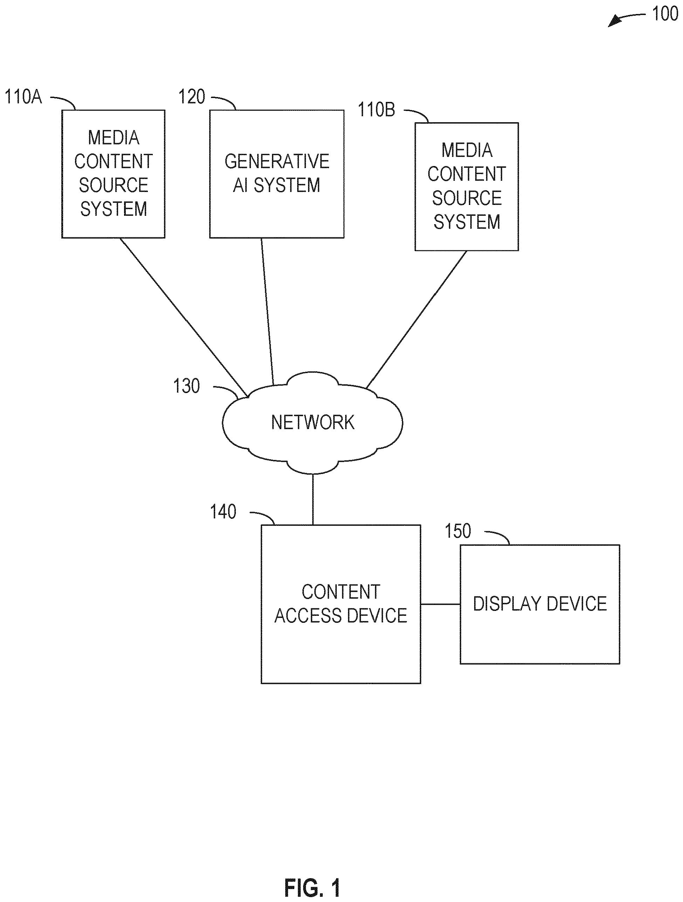

FIG. 1 is a network diagram illustrating a network environment 100 suitable for generative AI fingerprinting, according to some example embodiments. The network environment 100 includes media content source systems 110A and 110B, a generative AI system 120, a network 130, a content access device 140, and a display device 150. The media content source systems 110A-110B may be referred to collectively as the media content source systems 110 or generically as a media content source system 110. Though two media content source systems 110 are shown in FIG. 1, dozens, hundreds, or thousands of media content source systems 110 may be used by each generative AI system 120. Likewise, though a single generative AI system 120 is shown, the content access device 140 may be in communication with many such generative AI systems. And, while only a single content access device 140 is shown, the generative AI system 120 may be in communication with millions of such devices.

The media content source systems 110 produce media content items such as copyrighted images, video, music, or text. The media content source systems 110 provide the media content items to the generative AI system 120 for training a generative AI. The content access device 140 accesses media content items from the media content source systems 110 or uses the generative AI system 120 to generate new media content items. The media content items are received via the network 130 and displayed on the display device 150.

The output generated by the generative AI system 120 may be substantially similar to media content items provided by the media content source system 110A, may be substantially similar to media content items provided by the media content source system 110B, both, or neither. For example, media content items provided by the media content source system 110A may include copyrighted comic book characters and media content items provided by the media content source system 110B may include copyrighted movie characters. A generated image of a pastoral scene would not be substantially similar to the media content items provided from either media content source system 110. However, a generated image that included both one of the provided comic book characters and one of the provided movie characters would be substantially similar to the training data provided by both media content source systems 110A-110B.

As another example of protected media, a painter may have a unique style. The output generated by the generative AI system 120 may "copy" the painter's style. Accordingly, such an output would be substantially similar to one or more of the painter's fingerprinted images.

If the user of the generative AI system 120 is not authorized to receive images that are substantially similar to those provided by one of the media content source systems 110, the generative AI system 120 may prevent such images from being provided. The received media content items from each of the media content source systems 110 may be fingerprinted.

Determining whether two fingerprints match may be determined by comparing a distance between two vectors (one for each fingerprint) to a threshold. The distance measure may be a Euclidian distance, a cosine similarity measure, a dot product, or any suitable combination thereof.

Alternatively, determining whether the fingerprint for the output image may be provided to a trained machine learning model ((e.g., a convolutional neural network (CNN) or support vector machine (SVM)) that generates, as an output, an indication of whether the fingerprint matches a fingerprint in a codebook. Training a machine-learning model may include using gradient boosting, kernel functions, or both. Rather than determining whether the fingerprint of the image being generated matches a specific fingerprint of one of the received media content items, a machine-learning model may be trained on one or more codebooks to determine if the fingerprint of image being generated matches any fingerprint in the codebooks. Images that do not belong to any of the codebooks are also used for training. In such example embodiments, the input to the machine-learning model that detects matches is the fingerprint of the image (or video, audio, etc.) being generated by the generative AI model and the output is an integer, floating-point vector that represents the probability of infringing the respective different codebooks, Boolean, or vector value that indicates whether the fingerprint matches any fingerprint in the codebook.

As still another alternative, determining that two fingerprints match may be determined using a Siamese neural network (SNN). An SNN contains two or more sub-networks. Each of the sub-networks uses the same configuration (e.g., numbers and types of layers) with the same parameters and weights. During training, parameter updates are applied identically among all of the sub-networks. SNNs are trained to learn a similarity function. Once trained, the fingerprint for the image being generated is provided as input to one sub-network of the SNN and a fingerprint from a codebook is provided as input to another sub-network of the SNN. The output of the SNN is a measure of similarity of the two fingerprints.

When an output image is generated, or is in the process of being generated, and has a fingerprint that matches the fingerprint of one of the received media content items, the generative AI system 120 takes corrective action. The corrective action may be to refuse to provide the generated image to the content access device 140 and provide an informational message instead. For example, the user may be requested to provide a different prompt to the generative AI system 120. Alternatively, the corrective action may be to alter the internal variables of the generative AI to cause the generative AI to create an output with a fingerprint that does not match the fingerprint of the media content item provided by the media content source system 110.

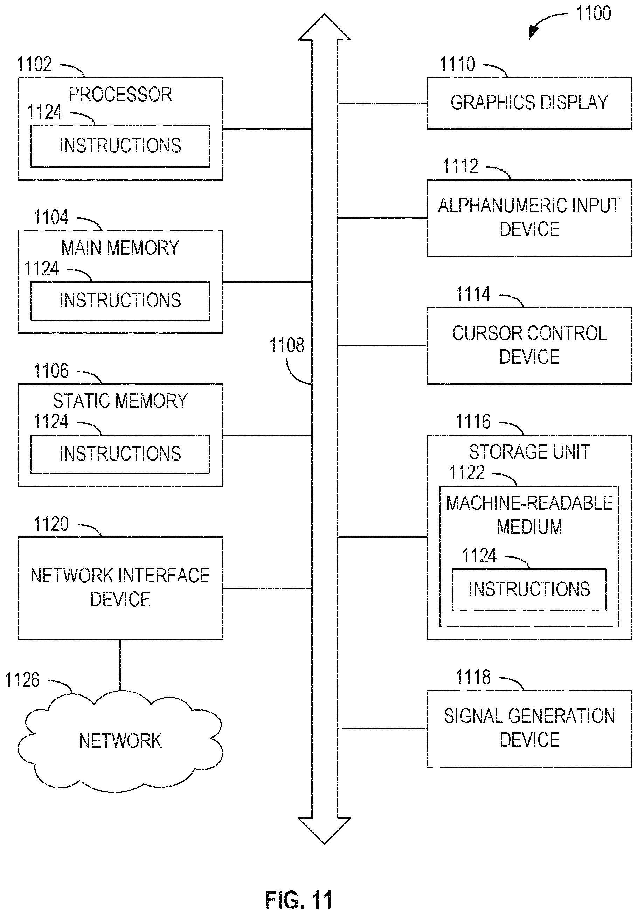

The media content source systems 110, the generative AI system 120, and the content access device 140 may each be implemented in a computer system, in whole or in part, as described below with respect to FIG. 11.

Any of the machines or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 11. Any or all of the devices 110-150 may include a database or be in communication with a database server that provides access to a database. As used herein, a "database" is a data storage resource and may store data structured as a text file, a table, a spreadsheet, a relational database (e.g., an object-relational database), a triple store, a hierarchical data store, a document-oriented NoSQL database, a file store, a binary large object (BLOB) stored in the cloud, or any suitable combination thereof. The database may be an inmemory database. Moreover, any two or more of the machines, databases, or devices illustrated in FIG. 1 may be combined into a single machine, database, or device, and the functions described herein for any single machine, database, or device may be subdivided among multiple machines, databases, or devices.

The media content source systems 110, the generative AI system 120, and the content access device 140 may be connected by the network 130. The network 130 may be any network that enables communication between or among machines, databases, and devices. Accordingly, the network 130 may be a wired network, a wireless network (e.g., a mobile or cellular network), or any suitable combination thereof. The network 130 may include one or more portions that constitute a private network, a public network (e.g., the Internet), or any suitable combination thereof.

In some example embodiments, the content access device 140 is a set-top box that provides audio-visual signals to a television and interacts with a user via a remote control. For example, the set-top box may cause a user interface (e.g., a menu) to be displayed on the television and the user can interact with the menu by pressing directional inputs and other inputs on the remote control (e.g., select, back, alphanumeric characters, or any suitable combination thereof). Additionally or alternatively, the set-top box may be controlled by a smart device (e.g., a smartphone, a tablet, or a wearable device) comprising a display. In these embodiments, the available inputs may be presented to the user of the smart device in a second user interface.

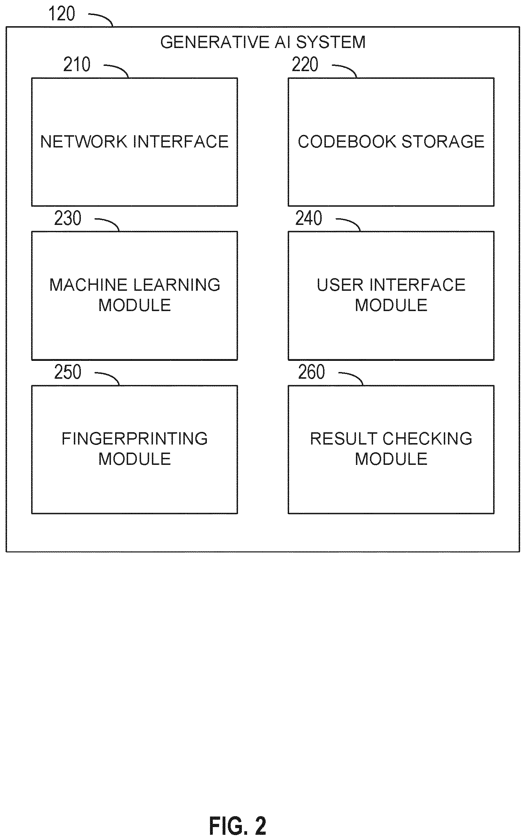

FIG. 2 is a block diagram of the generative AI system 120, according to some example embodiments, suitable for generative AI fingerprinting. The generative AI system 120 is shown as including a network interface 210, a codebook storage 220, a machine learning module 230, a user interface module 240, a fingerprinting module 250, and a result checking module 260, all configured to communicate with each other (e.g., via a bus, shared memory, or a switch). Any one or more of the modules described herein may be implemented using hardware (e.g., a processor of a machine). For example, any module described herein may be implemented by a processor configured to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

The network interface 210 receives data sent to the generative AI system 120 and transmits data from the generative AI system 120. For example, the network interface 210 may receive, from the media content source system 110A, a set of media content items for training a machine-learning model. Communications sent and received by the network interface 210 may be intermediated by the network 130.

The fingerprinting module 250 generates fingerprints for the media content items received from the media content source systems 110. The set of fingerprints from a particular source is referred to as a codebook. The codebooks for the media content source systems 110 are stored in the codebook storage 220. The fingerprinting module 250 also generates fingerprints for media content items generated by the machine learning module 230.

The result checking module 260 may compare a fingerprint of a generated media content item with fingerprints in the codebook storage 220 to determine if the generated media content item (or a media content item in the process of being generated) is (or will be) similar to any of the media content items provided by the media content source systems 110. If so, the generated media content item may be modified or internal variables of the generative AI may be modified to change the results of the generative AI.

The user interface module 240 generates a user interface for display on the display device 150. For example, a web browser implementation of the user interface module 240 receives web content (e.g., hypertext markup language (HTML) files, JavaScript files, cascading style sheets (CSS) data, or any suitable combination thereof) and generates a user interface based on the web content. A user may interact with the generative AI system 120 via the user interface module 240. For example, a text interface may be presented that allows the user to enter a text prompt to be used for input to the generative AI. As another example, a user may use a microphone to provide an audio description or musical prompt for the generative AI. As still another example, a user may use a camera to provide an image or video prompt for the generative AI. The user interface may include output generated by the generative AI, such as text, image, audio, video, or any suitable combination thereof.

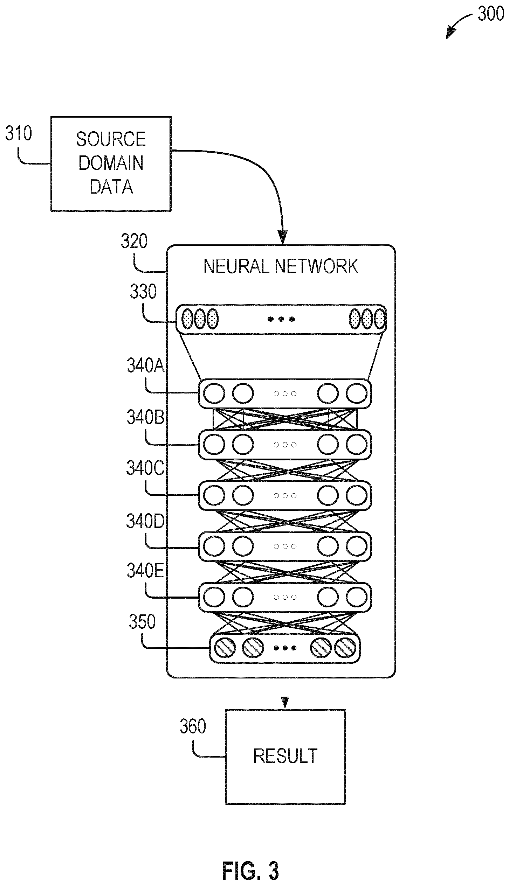

**FIG. 3** illustrates the structure 300 of a neural network 320, according to some example embodiments. The neural network 320 takes source domain data 310 as input and processes the source domain data 310 using the input layer 330; the intermediate, hidden layers 340A, 340B, 340C, 340D, and 340E; and the output layer 350 to generate a result 360.

A neural network, sometimes referred to as an artificial neural network, is a computing system based on consideration of biological neural networks of animal brains. Such systems progressively improve performance, which is referred to as learning, to perform tasks, typically without task-specific programming. For example, in image recognition, a neural network may be taught to identify images that contain an object by analyzing example images that have been tagged with a name for the object and, having learned the object and name, may use the analytic results to identify the object in untagged images.

A neural network is based on a collection of connected units called neurons, where each connection, called a synapse, between neurons can transmit a unidirectional signal with an activating strength that varies with the strength of the connection. The receiving neuron can activate and propagate a signal to downstream neurons connected to it, typically based on whether the combined incoming signals, which are from potentially many transmitting neurons, are of sufficient strength, where strength is a parameter.

Each of the layers 330-350 comprises one or more nodes (or "neurons"). The nodes of the neural network 320 are shown as circles or ovals in FIG. 3. Each node takes one or more input values, processes the input values using zero or more internal variables, and generates one or more output values. The inputs to the input layer 330 are values from the source domain data 310. The output of the output layer 350 is the result 360. The intermediate layers 340A-340E are referred to as "hidden" because they do not interact directly with either the input or the output and are completely internal to the neural network 320. Though five hidden layers are shown in FIG. 3, more or fewer hidden layers may be used.

A model may be run against a training dataset for several epochs, in which the training dataset is repeatedly fed into the model to refine its results. In each epoch, the entire training dataset is used to train the model. Multiple epochs (e.g., iterations over the entire training dataset) may be used to train the model. In some example embodiments, the number of epochs is 10, 100, 500, or 1000. Within an epoch, one or more batches of the training dataset are used to train the model. Thus, the batch size ranges between 1 and the size of the training dataset while the number of epochs is any positive integer value. The model parameters are updated after each batch (e.g., using gradient descent).

For self-supervised learning, the training dataset comprises self-labeled input examples. For example, a set of color images could be automatically converted to black-and-white images. Each color image may be used as a "label" for the corresponding black-and-white image and used to train a model that colorizes black-and-white images. This process is self-supervised because no additional information, outside of the original images, is used to generate the training dataset. Similarly, when text is provided by a user, one word in a sentence can be masked and the network trained to predict the masked word based on the remaining words.

Each model develops a rule or algorithm over several epochs by varying the values of one or more variables affecting the inputs to more closely map to a desired result, but as the training dataset may be varied, and is preferably very large, perfect accuracy and precision may not be achievable. A number of epochs that make up a learning phase, therefore, may be set as a given number of trials or a fixed time/computing budget, or may be terminated before that number/budget is reached when the accuracy of a given model is high enough or low enough or an accuracy plateau has been reached. For example, if the training phase is designed to run n epochs and produce a model with at least 95% accuracy, and such a model is produced before the nth epoch, the learning phase may end early and use the produced model satisfying the end-goal accuracy threshold. Similarly, if a given model is inaccurate enough to satisfy a random chance threshold (e.g., the model is only 55% accurate in determining true/false outputs for given inputs), the learning phase for that model may be terminated early, although other models in the learning phase may continue training. Similarly, when a given model continues to provide similar accuracy or vacillate in its results across multiple epochs - having reached a performance plateau - the learning phase for the given model may terminate before the epoch number/computing budget is reached.

Once the learning phase is complete, the models are finalized. In some example embodiments, models that are finalized are evaluated against testing criteria. In a first example, a testing dataset that includes known outputs for its inputs is fed into the finalized models to determine an accuracy of the model in handling data that it has not been trained on. In a second example, a false positive rate or false negative rate may be used to evaluate the models after finalization. In a third example, a delineation between data clusterings is used to select a model that produces the clearest bounds for its clusters of data.

The neural network 320 may be a deep learning neural network, a deep CNN, a recurrent neural network (RNN), a transformer neural network, or another type of neural network. A neuron is an architectural element used in data processing and AI, particularly machine learning. A neuron implements a transfer function by which a number of inputs are used to generate an output. In some example embodiments, the inputs are weighted and summed, with the result compared to a threshold to determine if the neuron should generate an output signal (e.g., a 1) or not (e.g., a 0 output). The inputs of the component neurons are modified through the training of a neural network. One of skill in the art will appreciate that neurons and neural networks may be constructed programmatically (e.g., via software instructions) or via specialized hardware linking each neuron to form the neural network.

An example type of layer in the neural network 320 is a Long Short Term Memory (LSTM) layer. An LSTM layer includes several gates to handle input vectors (e.g., time-series data), a memory cell, and an output vector. The input gate and output gate control the information flowing into and out of the memory cell, respectively, whereas forget gates optionally remove information from the memory cell based on the inputs from linked cells earlier in the neural network. Weights and bias vectors for the various gates are adjusted over the course of a training phase, and once the training phase is complete, those weights and biases are finalized for normal operation.

A deep neural network (DNN) is a stacked neural network, which is composed of multiple layers. The layers are composed of nodes, which are locations where computation occurs, loosely patterned on a neuron in the human brain, which fires when it encounters sufficient stimuli. A node combines input from the data with a set of coefficients, or weights, that either amplify or dampen that input. Thus, the coefficients assign significance to inputs for the task the algorithm is trying to learn. These input-weight products are summed, and the sum is passed through what is called a node's activation function to determine whether and to what extent that signal progresses further through the network to affect the ultimate outcome. A DNN uses a cascade of many layers of non-linear processing units for feature extraction and transformation. Each successive layer uses the output from the previous layer as input. Higher-level features are derived from lowerlevel features to form a hierarchical representation. The layers following the input layer may be convolution layers that produce feature maps that are filtering results of the inputs and are used by the next convolution layer.

In training of a DNN architecture, a regression, which is structured as a set of statistical processes for estimating the relationships among variables, can include a minimization of a cost function. The cost function may be implemented as a function to return a number representing how well the neural network performed in mapping training examples to correct output. In training, if the cost function value is not within a pre-determined range, based on the known training images, backpropagation is used, where backpropagation is a common method of training artificial neural networks that are used with an optimization method such as a stochastic gradient descent (SGD) method.

Use of backpropagation can include propagation and weight updates. When an input is presented to the neural network, it is propagated forward through the neural network, layer by layer, until it reaches the output layer. The output of the neural network is then compared to the desired output, using the cost function, and an error value is calculated for each of the nodes in the output layer. The error values are propagated backwards, starting from the output, until each node has an associated error value which roughly represents its contribution to the original output. Backpropagation can use these error values to calculate the gradient of the cost function with respect to the weights in the neural network. The calculated gradient is fed to the selected optimization method to update the weights to attempt to minimize the cost function.

In some example embodiments, the structure of each layer is predefined. For example, a convolution layer may contain small convolution kernels and their respective convolution parameters, and a summation layer may calculate the sum, or the weighted sum, of two or more values. Training assists in defining the weight coefficients for the summation.

One way to improve the performance of DNNs is to identify newer structures for the feature-extraction layers, and another way is by improving the way the parameters are identified at the different layers for accomplishing a desired task. For a given neural network, there may be millions of parameters to be optimized. Trying to optimize all these parameters from scratch may take hours, days, or even weeks, depending on the amount of computing resources available and the amount of data in the training set.

One of ordinary skill in the art will be familiar with several machine learning algorithms that may be applied with the present disclosure, including linear regression, random forests, decision tree learning, neural networks, DNNs, genetic or evolutionary algorithms, and the like.

The transformer architecture processes an entire input at once rather than sequentially. For example, a RNN processes words or sentences sequentially, with the output of the RNN treated as an input for each input after the first (thus the use of the word "recurrent" in the name). As a result, relationships between elements that are far apart in the input are difficult to detect. The transformer architecture receives a larger input and learns the interrelationships between the elements and the output using an attention mechanism. Since all elements are processed together, distance between the elements of the input does not affect the learning process.

The image-generating neural network 460, the text-processing neural network 420, the image-processing neural network 520, and the image-generating neural network 640 may be of the form of the neural network 320. During processing of an input element of the source domain data 310, the output values of the hidden layers 340A-340E may be generated sequentially. Accordingly, the processing of the neural network 320 may be paused after the generation of output values at any of the hidden layers 340A-340E to analyze the state of the neural network 320 before the result 360 is generated. Alternatively, the processing of the neural network 320 may continue in parallel while a fingerprint generated from the hidden layers 340A-340E is analyzed. In that way, if no change to the neural network 320 is made, the generation of the output by the neural network 320 is not impeded. If a change to the neural network 320 is made, the additional work done in parallel may be discarded.

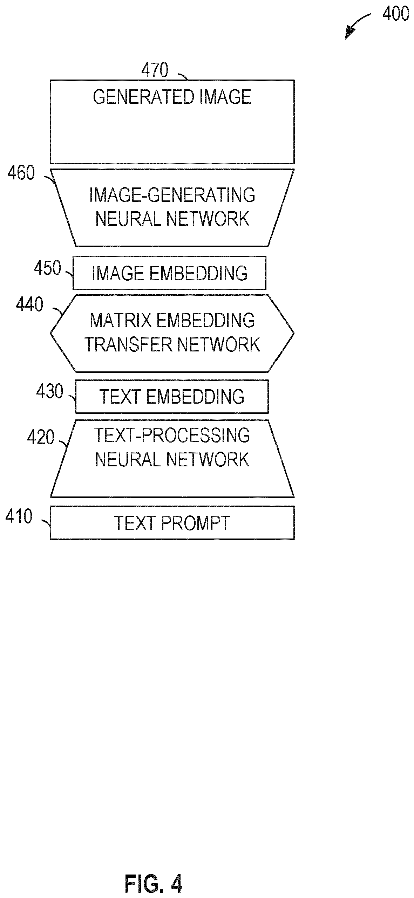

FIG. 4 is a diagram 400 showing data and components for generative AI that generates an image 450 from a text prompt 410, according to some example embodiments. A text prompt 410 is provided as input to a text-processing neural network 420. For example, a user may provide a text string as an input. The text string may be converted to a matrix representation in which each row corresponds to one word or token in the input. The value of a row may be determined using a "one-hot" representation, in which each word in the vocabulary has a dedicated position in the row and the value of each position is zero if the input word is not the corresponding word in the vocabulary and one if the input word is the corresponding word in the vocabulary. The vector or matrix representation of the text is provided to the text-processing neural network 420.

The output of the text-processing neural network 420 is a text embedding 430, a vector representation of the text prompt 410. The text embedding 430 is provided as an input to a matrix embedding transfer network 440. The matrix embedding transfer network 440 converts the text embedding 430 that represents the text prompt 410 to an image embedding 450 that represents an image. An image-generating neural network 460 receives the image embedding 450 and generates a generated image 470. The image-generating neural network 460, the text-processing neural network 420, the matrix embedding transfer network 440, and the image-generating neural network 460 may be of the form of the neural network 320 of FIG. 3. The image-generating neural network 460 may be trained using a deep auto encoder architecture.

A fingerprint for an image being generated during processing may be taken from one or more rows of the image-generating neural network 460. If the fingerprint for the image matches a fingerprint for a protected image, the image-generating neural network 460 may be halted, preventing an image from being generated that is too similar to a protected image. Alternatively, the internal values of the image-generating neural network 460 may be modified and processing of the image-generating neural network 460 allowed to continue. As a result, a different image will be generated.

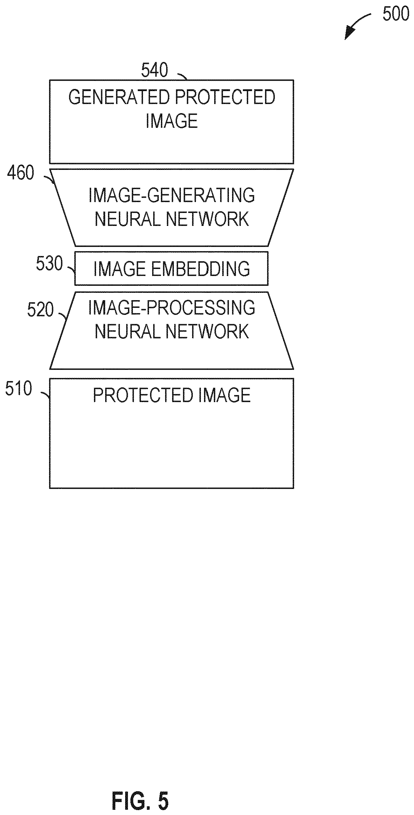

FIG. 5 is a diagram 500 showing data and components for generative AI that generates an image from an image, according to some example embodiments. An image 510 is provided as input to an image-processing neural network 520. For example, the media content source system 110A may provide a copyrighted image to be protected from copying by unauthorized users as an input. The image 510 may be received by the image-processing neural network 520 as a matrix, in which the position of each cell of the matrix corresponds to a pixel of the image 510 and the value of each cell of the matrix contains a color value of the pixel.

The output of the image-processing neural network 520 is an image embedding 530, a vector representation of the image 510. The image embedding 530 is provided as an input to an image-generating neural network 460, which is the same image-generating neural network as the image-generating neural network 460 of FIG. 4. Based on the input image embedding 530, the image-generating neural network 460 generates an image 540. The generated image 540 may be substantially similar to the input image 510, and thus may be protected by the copyright that applies to the input image 510. The image-generating neural network 460 and the image-processing neural network 520 may be of the form of the neural network 320 of FIG. 3. Alternatively, other types of neural networks may be used.

Fingerprints for protected images may be generated by taking values from one or more rows of the image-generating neural network 460. The fingerprints for the protected images may be stored in a database or codebook and used for comparison to fingerprints for later images that will be generated. Thus, the fingerprinting of the image-to-image transformation process allows for detection of future use of the image-generating neural network 460 to generate protected images, and to take appropriate action.

FIG. 6 is a diagram 600 showing data and components for a neural network that determines a classification for a fingerprint, according to some example embodiments. A fingerprint 610 is input to a classifier neural network 620. The fingerprint 610 may be a vector or matrix that comprises internal values of neurons of the image-generating neural network 460 of FIGS. 4-5. The classifier neural network 620 generates a classification 630 for the fingerprint 610. For example, the classification 630 may be a first value if the fingerprint 610 is for a free image, a second value if the fingerprint 610 is protected by a first license, a third value if the fingerprint 610 is protected by a second license, and so on. As another example, the classification 630 may be a probability vector, with a value for each copyrighted codebook.

The classifier neural network 620 may be trained by providing fingerprints for licensed images as inputs and training the classifier neural network 620 to correctly identify the licenses for the fingerprints. Fingerprints for additional unlicensed images may also be provided as part of the training set, so that the classifier neural network 620 can also identify free images. The classifier neural network 620 may be of the form of the neural network 320 of FIG. 3. Alternatively, machine learning models other than deep learning may be used, such as gradient boosting, random forest, kernel support vector machine (SVM), or any suitable combination thereof.

The classifier neural network 620 may be used by the result checking module 260 of FIG. 2 to determine if a fingerprint for an image being generated will generate an image that is similar to one or more fingerprints in the codebook storage 220. Based on the output of the classifier neural network 620, the result checking module 260 determines if the generated media content item (or a media content item in the process of being generated) is (or will be) similar to any of the media content items provided by the media content source systems 110 of FIG. 1.

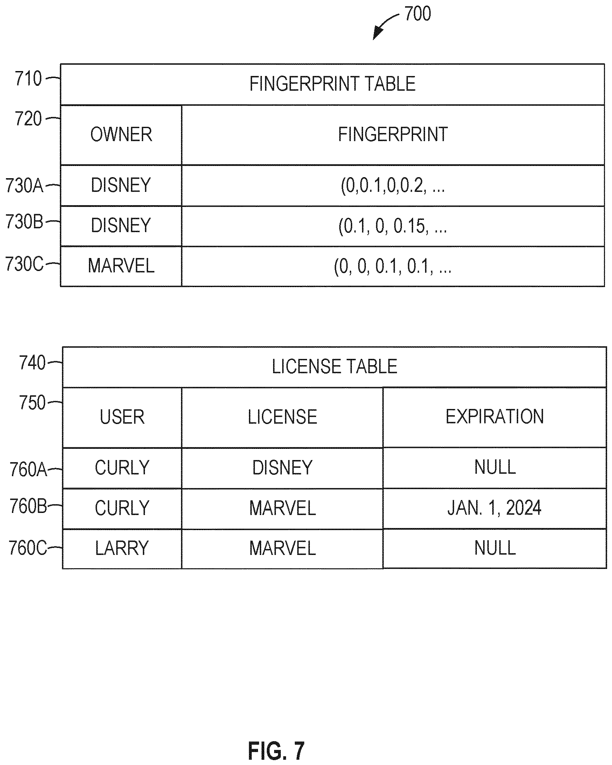

FIG. 7 is a block diagram illustrating a database schema 700 suitable for use in generative AI fingerprinting, according to some example embodiments. The database schema 700 includes a fingerprint table 710 and a license table 740. The fingerprint table 710 includes rows 730A, 730B, and 730C of a format 720. The license table 740 includes rows 760A, 760B, and 760C of a format 750. Though only three rows are shown in each of the tables of the database schema 700, the use of thousands or millions of rows is contemplated. For example, the fingerprint table 710 may include a row for each protected image used to train the neural network 320. The license table 740 may include a row for each provided license, which may be the product of the number of media content source systems 110 of FIG. 1 with the number of entities using the generative AI system 120, also of FIG. 1.

Each row 730A-730C of the fingerprint table 710 includes a fingerprint of an image and identifies the owner of the image. The fingerprint may comprise output values of one or more of the hidden layers 340A-340E of the neural network 320 implementing the image-generating neural network 460. In various example embodiments, different ones of the hidden layers 340A-340E are used to generate the fingerprint. For example, a set of one layer, two layers, three layers, or four layers may be selected at the middle of the hidden layers 340A-340E (e.g., layers 49-51 of a neural network comprising 100 layers), within 5% of the middle (e.g., offset from the middle by 5 or fewer layers in a neural network comprising 100 layers), or within 10% of the middle (e.g., offset from the middle by 10 or fewer layers in a neural network comprising 100 layers). A set of rows of the fingerprint table 710 having the same owner forms a codebook for the owner. The layers used for the fingerprint may be fully or partially used. For example, the values of every other cell in each layer may be used in the fingerprint.

The rows 760A-760C store licensing information for users. For example, the row 760A shows that Curly has a perpetual license to images in the Disney codebook. The row 760B shows that Curly has a license to images in the Marvel codebook, but the license expires on January 1, 2024. Larry has a perpetual license to images in the Marvel codebook, as indicated by the row 760C.

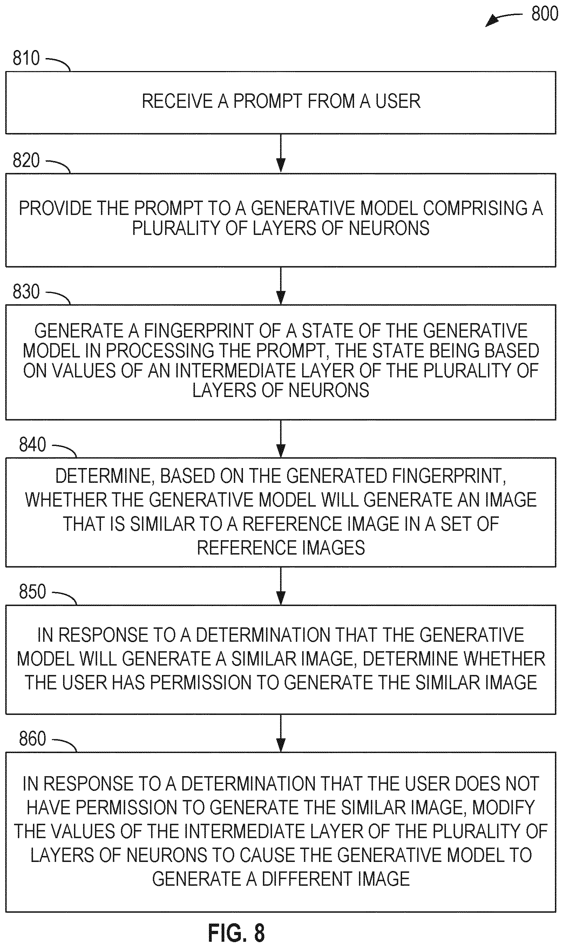

FIG. 8 is a flowchart illustrating operations of a method 800 suitable for modifying output of generative AI based on fingerprints, according to some example embodiments. The method 800 includes operations 810, 820, 830, 840, 850, and 860. By way of example and not limitation, the method 800 is described below as being performed by the generative AI system 120 in communication with the content access device 140 using the network 130, all of FIG. 1.

In operation 810, the generative AI system 120 receives a prompt from a user. For example, the content access device 140 may present a user interface on the display device 150 to a user. The user may enter a text prompt that is transmitted over the network 130 to the generative AI system 120.

In operation 820, the generative AI system 120 provides the prompt to a generative model comprising a plurality of layers of neurons. For example, the generative AI system 120 may process the prompt using the text-processing neural network 420 of FIG. 4, and provide a resulting text embedding to the matrix embedding transfer network 440. The matrix embedding transfer network 440 generates the image embedding 450, processed by the image-generating neural network 460. The image-generating neural network 460 comprises layers of neurons such as the layers 340A-340E and 350 of FIG. 3.

The generative AI system 120, in operation 830, generates a fingerprint of a state of the generative model in processing the prompt, the state being based on values of an intermediate layer of the plurality of layers of neurons. For example, the fingerprint may comprise a vector with a number of elements equal to the number of neurons in the intermediate layer 340C, with the value of each element being set to the output value of a corresponding neuron in the layer. As another example, the fingerprint may comprise a matrix composed of multiple such vectors, with the values of each row of the matrix being set to the output values of different layers of neurons. The operation of the generative model may be paused during operations 830-860 or proceed in parallel. In some example embodiments, a faster but less-accurate method of checking the fingerprint is used to determine a probability of finding a match. If the probability exceeds a predetermined threshold, the operation of the generative model is paused while the slower and more-accurate method is used. If the probability does not exceed the threshold, the operation of the generative model proceeds while the slower and more-accurate method is used. In this way, when the fingerprint does not match and the faster method correctly detects this, the operation of the generative model will not be significantly affected. Likewise, when the fingerprint does match and the faster method correctly detects this, computing resources that would have been consumed by the generative model are saved.

In operation 840, the generative AI system 120 determines, based on the generated fingerprint, whether the generative model will create an image that is similar to a reference image in a set of images. The set of images may be a set of images provided by one of the media content source systems 110 of FIG. 1, a set of images with the same owner as indicated by the fingerprint table 710 of FIG. 7, or any suitable combination thereof. The determination whether the image that will be generated is similar to the reference image may be made by comparing the generated fingerprint to the stored fingerprints in the fingerprint table 710. For example, a distance between the two vectors may be calculated and compared to a predetermined threshold value. If the distance is less than the threshold, the fingerprints are similar and the generative AI system 120 determines that the generative model will create an image that is similar to the image having the similar fingerprint. The distance may be measured as an L1 norm, determined by summing the absolute value of the difference in the values of each corresponding pair of vector elements. Alternatively, the distance may be measured as an L2 (Euclidean) norm, determined by taking the square root of the sum of the squares of the difference in the values of each corresponding pair of vector elements.

As another example, a dot product of the two vectors, a cosine similarity of the two vectors, or another measure may be compared to a predetermined threshold value. If the similarity is greater than the threshold, the fingerprints are similar and the generative AI system 120 determines that the generative model will create an image that is similar to the image having the similar fingerprint. As still another example, the generated fingerprint may be provided to a machine-learning model trained to identify similar fingerprints (e.g., a classification algorithm), such as the classifier neural network 620 of FIG. 6. In this example, the output of the machine-learning model is used to determine whether the generative model will create an image that is similar to an image in the codebook.

If the generative model will not generate an image that is similar to a reference image, the generative AI is permitted to generate the image and provide the image to the user. However, in response to a determination that the generative model will generate a similar image, in operation 850, the generative AI system 120, determines whether the user has permission to generate the similar image. For example, the row of the fingerprint table 710 that contains the fingerprint of the reference image identifies the owner of the reference image. The license table 740 can be checked to determine if the user (e.g., by checking permissions associated with an account of the user) has a license to access images provided by the owner. If a current license is found, operation 860 is skipped and the generative AI proceeds with image generation without interference. If no license is found or the account's license has expired, the method 800 proceeds with operation 860.

In response to the determination made in operation 850, the generative AI system 120 modifies the values of the intermediate layer of the plurality of layers to cause the generative model to generate a different image (operation 860). For example, considering the fingerprint of the reference image and the fingerprint of the image that will be generated as vectors (termed a reference vector and a state vector, respectively), a modification vector can be determined that is orthogonal to the reference vector and, when added to the state vector, increases the distance between the reference vector and the modified state vector.

As another example, a number K (e.g., 1, 2, 3, 4, 5, or 10) of the nearest codebook vectors may be identified. A gradient from the state vector to the K nearest codebook vectors is determined and used as the modification vector. As yet another example, the modification vector may be a noise vector (e.g., a vector with values randomly determined within a predetermined range such as -0.1 to +0.1, -10% to +10% of the corresponding state vector value, or the like). As still another example, the modification vector may be a value-shifting vector, with each component having a value that is a fixed percentage (e.g., 2%, 5%, or 10%) of the corresponding state vector value.

In alternative embodiments, the values of different or additional layers may be modified in operation 860. For example, the values of the layer or layers used for the fingerprint may be modified, the values of one or more layers before the layer or layers used for the fingerprint may be modified, the values of one or more layers after the layer or layers used for the fingerprint may be modified, the values of the first layer or layers may be modified, or any suitable combination thereof. As another example, the generative model may create an image from an audio input. The modification may occur at layers that convert the input audio to tokens that represent text. By applying the modification in those layers, the later layers will generate an image based on different text tokens.

After modifying the state vector by adding the modification vector, the values in the modified state vector are copied back to the neurons of the generative model. After modifying the values of the neurons of the intermediate layer, processing by the generative model may be resumed. As a result of changing the values of the neurons, the image generated by the generative model will be different than the image that would have been generated had the values not been changed.

After an image is generated by the generative model, the generative AI system 120 may provide the image to the content access device 140 for display on the display device 150. Thus, by use of the method 800, a content access device (e.g., a user's personal computer, smart phone, tablet, set-top box, or other computing device) is enabled to generate media content items without being enabled to generate media content items that are too similar (with the degree of similarity determined by the value used for the threshold in operation 830) to reference images provided by rights-holders.

Instead of performing operation 860 and causing the generative model to generate a different image, an unlicensed account's attempt to generate the image that is similar to the reference image may be rejected entirely. For example, an informational message may be provided, and the user requested to provide a different prompt to use for image generation. As another alternative, the generative model may be permitted to complete the process of generating the similar image and the resulting image may be modified. For example, a watermark or copyright notice may be added to the image.

Based on the determination in operation 860 that the image is similar to the reference image and that the user does not have permission to generate such an image, the presentation of the generated image may be accompanied by an advertisement for the owner of the reference image. For example, if the generated image is similar to an image of a copyrighted character, the generated image may be presented along with an advertisement for a product or service provided by the copyright holder. Alternatively, the advertisement may be for a product or service provided by a different entity, with the advertisement being paid for by the different entity and the copyright holder receiving at least part of the payment.

For this and other processes and methods disclosed herein, the functions performed in the processes and methods may be implemented in differing order. Further, the outlined steps and operations are only provided as examples, and some of the steps and operations may be optional, combined into fewer steps and operations, or expanded into additional steps and operations without detracting from the essence of the disclosed embodiments.

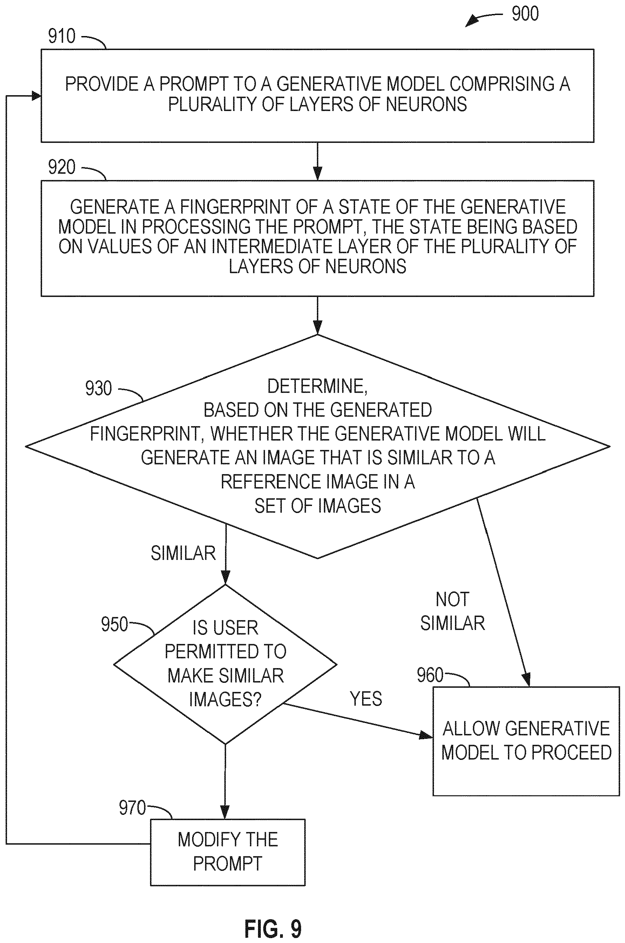

FIG. 9 is a flowchart illustrating operations of a method 900 suitable for modifying input prompts to generative AI based on fingerprints, according to some example embodiments. The method 900 includes operations 910, 920, 930, 940, 950, 960, and 970. By way of example and not limitation, the method 900 is described below as being performed by the generative AI system 120 in communication with the content access device 140 using the network 130, all of FIG. 1.

In operation 910, a prompt is provided to a generative AI model. For example, a user may provide a text, voice, image, or video prompt via the user interface module 240 of FIG. 2. The generative AI system 120 may perform pre-processing of the input (e.g., by converting text to a vector representation) and provides the input to the machine learning module 230.

The fingerprinting module 250, in operation 920, generates a fingerprint of a state of the generative model in processing the prompt, the state being based on values of an intermediate layer (or multiple intermediate layers) of the plurality of layers of neurons. For example, internal variables of each neuron in the one or more intermediate layers may be copied into a vector that is used as a fingerprint.

In operation 930, the generative AI system 120 determines, based on the generated fingerprint, whether the generative model will generate an image that is similar to a reference image in a set of images. Various methods may be used in this step, as discussed above with respect to operation 840 of FIG. 8.

If the generative model will generate an image that is similar to one or more of the reference images, operation 950 is performed. If not, the method 900 proceeds with operation 960 and the generative model is allowed to proceed. In operation 950, the generative AI system 120 determines if a user that provided the prompt is permitted to make similar images. If so, the method 900 proceeds to operation 960 and the similar image is generated.

Operation 970 is performed if the generative model is going to generate an image that is similar to one or more reference images and the user is not permitted to make such images. In the example of FIG. 9, the generative AI system 120 modifies the prompt provided by the user and provides the modified prompt as a new input to the generative model, repeating operation 910 with the modified prompt. Modifying the prompt may comprise substituting text in the prompt according to a database lookup (e.g., replacing a name of a copyrighted character with a generic term, removing a name of a copyrighted character without replacement, or the like).

Instead of performing operation 970 and causing the generative model to generate a different image based on a modified prompt, an unlicensed account's attempt to generate the image that is similar to the reference image may be rejected entirely. For example, an informational message may be provided, and the user requested to provide a different prompt to use for image generation. As another alternative, the generative model may be permitted to complete the process of generating the similar image and the resulting image may be modified. For example, a watermark or copyright notice may be added to the image.

As still another alternative, the resulting image may be modified by blurring a portion of the image found to contain protected material. For example, a bounding box of a depiction of a protected character within the generated image may be determined by providing the generated image to a machine learning model trained for that purpose. The portion of the generated image within the determined bounding box may be removed or blurred.

The methods 800 and 900 may be performed by the generative AI system 120 in response to prompts received from the content access device 140. After the image is generated (and modified, if appropriate), the image is sent to the content access device 140 from the generative AI system 120 via the network 130. The content access device 140 may save a local copy of the generated image, display the generated image on the display device 150, or any suitable combination thereof.

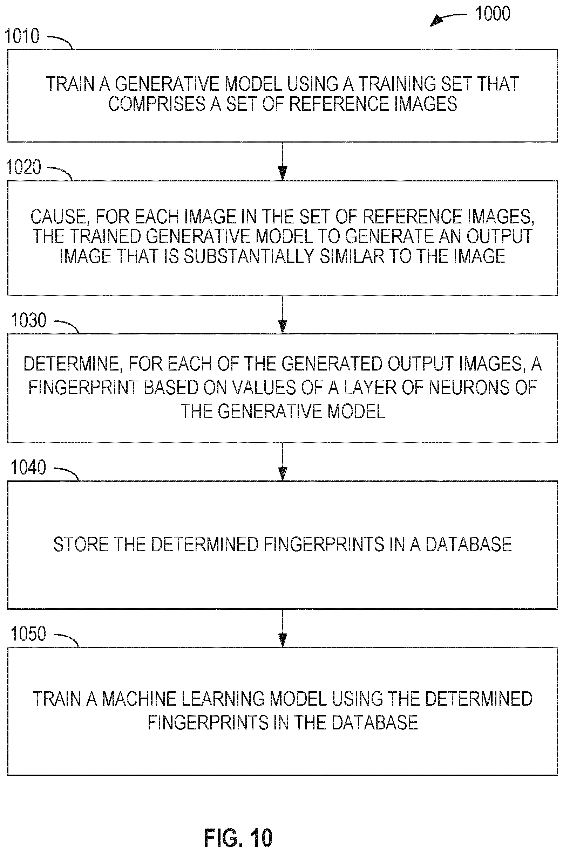

FIG. 10 is a flowchart illustrating operations of a method 1000 suitable for training a machine learning model to recognize fingerprints that identify that a generative model will generate a protected image, according to some example embodiments. The method 1000 includes operations 1010, 1020, 1030, and 1040. By way of example and not limitation, the method 1000 is described as being performed by the generative AI system 120 of FIG. 1, using the modules of FIG. 2 and the database schema 700 of FIG. 7.

For each image in the set of reference images, a generative model generates an output image that is substantially similar to the image (operation 1010). For example, as shown in the diagram 500 of FIG. 5, the image-processing neural network 520 may take an image from the set of reference images as an input and generate the text embedding 530. The generative model is used as the image-generating neural network 460 to generate the protected image 540, which is substantially similar to the protected image 510.

In operation 1020, the fingerprinting module 250 determines, for each of the generated output images, a fingerprint based on values of a layer of neurons of the generative model. The options for fingerprint generation in operation 1020 are similar to the options discussed above with respect to the operations 830 and 920 of FIGS. 8 and 9.

The generated fingerprints are stored in a database (e.g., the codebook storage 220 of FIG. 2 or the fingerprint table 710 of FIG. 7) in operation 1030. The stored fingerprints may be used by the methods 800 or 900 to determine if images generated by the generative model in the future are similar to protected images in the set of reference images.

In operation 1040, a machine learning model is trained using the determined fingerprints in the database. For example, a classifier may be trained using the fingerprints in the database and fingerprints of other images to determine whether a given input fingerprint should be classified as matching or non-matching. Data augmentation may be used to train the fingerprint detection model to improve model robustness. In some example embodiments, the determination of whether a fingerprint taken from the state of the generative model while processing a user-provided prompt matches a fingerprint for a reference image is made by providing the fingerprint taken from the state of the generative model to the machine learning model trained in operation 1040.

FIG. 11 illustrates a diagrammatic representation of a machine in the example form of a computing device 1100 within which a set of instructions, for causing the machine to perform any one or more of the methods discussed herein, may be executed. The computing device 1100 may include a mobile phone, a smart phone, a netbook computer, a rackmount server, a router computer, a server computer, a personal computer, a mainframe computer, a laptop computer, a tablet computer, a desktop computer, etc., within which a set of instructions, for causing the machine to perform any one or more of the methods discussed herein, may be executed. In alternative embodiments, the machine may be connected (e.g., networked) to other machines in a local area network (LAN), an intranet, an extranet, or the Internet. The machine may operate in the capacity of a server machine in a client-server network environment. The machine may include a personal computer, a set-top box, a server, a network router, a network switch, a network bridge, or any machine capable of executing a set of instructions (sequential or otherwise) that specify actions to be taken by that machine. Further, while only a single machine is illustrated, the term "machine" may also include any collection of machines that individually or jointly execute a set (or multiple sets) of instructions to perform any one or more of the methods discussed herein.

The example computing device 1100 includes a processing device (e.g., a processor) 1102, a main memory 1104 (e.g., read-only memory (ROM), flash memory, dynamic random access memory (DRAM) such as synchronous DRAM (SDRAM)), a static memory 1106 (e.g., flash memory, static random access memory (SRAM)), and a data storage device 1116, which communicate with each other via a bus 1108.

The processing device 1102 represents one or more general-purpose processing devices such as a microprocessor, central processing unit, or the like. More particularly, the processing device 1102 may include a complex instruction set computing (CISC) microprocessor, reduced instruction set computing (RISC) microprocessor, very long instruction word (VLIW) microprocessor, or a processor implementing other instruction sets, or processors implementing a combination of instruction sets. The processing device 1102 may also include one or more special-purpose processing devices such as an application specific integrated circuit (ASIC), a field programmable gate array (FPGA), a digital signal processor (DSP), a network processor, or the like. The processing device 1102 is configured to execute instructions 1124 for performing the operations and steps discussed herein.

The computing device 1100 may further include a network interface device 1120 which may communicate with a network 1126. The computing device 1100 also may include a display device 1110 (e.g., a liquid crystal display (LCD) or a cathode ray tube (CRT)), an alphanumeric input device 1112 (e.g., a keyboard), a cursor control device 1114 (e.g., a mouse), and a signal generation device 1118 (e.g., a speaker). In one implementation, the display device 1110, the alphanumeric input device 1112, and the cursor control device 1114 may be combined into a single component or device (e.g., an LCD touch screen).

The data storage device 1116 may include a computer-readable storage medium 1122 on which is stored one or more sets of instructions 1124 embodying any one or more of the methods or functions described herein. The instructions 1124 may also reside, completely or at least partially, within the main memory 1104, within the static memory 1106, and/or within the processing device 1102 during execution thereof by the computing device 1100, the main memory 1104 and the processing device 1102 also constituting computer-readable media. The instructions 1124 may further be transmitted or received over the network 1126 via the network interface device 1120.

While the computer-readable storage medium 1122 is shown in an example embodiment to be a single medium, the term "computer-readable storage medium" may include a single medium or multiple media (e.g., a centralized or distributed database and/or associated caches and servers) that store the one or more sets of instructions. The term "computer-readable storage medium" may also include any medium that is capable of storing, encoding, or carrying a set of instructions for execution by the machine and that cause the machine to perform any one or more of the methods of the present disclosure. The term "computer-readable storage medium" may accordingly be taken to include, but not be limited to, solid-state memories, optical media, and magnetic media.

Terms used herein and especially in the appended claims (e.g., bodies of the appended claims) are generally intended as "open" terms (e.g., the term "including" may be interpreted as "including, but not limited to," the term "having" may be interpreted as "having at least," the term "includes" may be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases may not be construed to imply that the introduction of a claim recitation by the indefinite articles "a" or "an" limits any particular claim containing such an introduced claim recitation to embodiments containing only one such recitation, even when the same claim includes the introductory phrases "one or more" or "at least one" and indefinite articles such as "a" or "an" (e.g., "a" and/or "an" may be interpreted to mean "at least one" or "one or more"); the same holds true for the use of definite articles used to introduce claim recitations.

In addition, even if a specific number of an introduced claim recitation is explicitly recited, those skilled in the art will recognize that such a recitation may be interpreted to mean at least the recited number (e.g., the bare recitation of "two recitations," without other modifiers, means at least two recitations, or two or more recitations). Further, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, may be understood to contemplate the possibilities of including one of the terms, some of the terms, or all of the terms. For example, the phrase "A or B" may be understood to include the possibilities of "A" or "B" or "A and B."

Embodiments described herein may be implemented using computer-readable media for carrying or having stored thereon computer-executable instructions or data structures. Such computer-readable media may be any available media that may be accessed by a general-purpose or special-purpose computer. By way of example, and not limitation, such computer-readable media may include non-transitory computer-readable storage media including Random Access Memory (RAM), ROM, Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid-state memory devices), or any other storage medium which may be used to carry or store desired program code in the form of computer-executable instructions or data structures and which may be accessed by a general-purpose or special-purpose computer. Combinations of the above may also be included within the scope of computer-readable media.

Computer-executable instructions may include, for example, instructions and data which cause a general-purpose computer, special-purpose computer, or special-purpose processing device (e.g., one or more processors) to perform a certain function or group of functions. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

As used herein, the terms "module" or "component" may refer to specific hardware implementations configured to perform the operations of the module or component and/or software objects or software routines that may be stored on and/or executed by general-purpose hardware (e.g., computer-readable media, processing devices, etc.) of the computing system. In some embodiments, the different components, modules, engines, and services described herein may be implemented as objects or processes that execute on the computing system (e.g., as separate threads). While some of the system and methods described herein are generally described as being implemented in software (stored on and/or executed by general-purpose hardware), specific hardware implementations or a combination of software and specific hardware implementations are also possible and contemplated.

All examples and conditional language recited herein are intended as pedagogical objects to aid the reader in understanding the inventive subject matter and the concepts contributed by the inventor to furthering the art, and are to be construed as being without limitation to such specifically recited examples and conditions.

Example 1 is a system comprising: one or more processors; a memory that stores instructions that, when executed by the one or more processors, cause the one or more processors to perform operations comprising: receiving a prompt from a user; providing the prompt to a generative model comprising a plurality of layers of neurons; generating a fingerprint of a state of the generative model in processing the prompt, the state being based on values of an intermediate layer of the plurality of layers of neurons; determining, based on the generated fingerprint, whether the generative model will generate an image that is similar to a reference image in a set of reference images; in response to a determination that the generative model will generate a similar image, determining whether the user has permission to generate the similar image; and in response to a determination that the user does not have permission to generate the similar image, modifying the values of the intermediate layer of the plurality of layers of neurons to cause the generative model to generate a different image.

In Example 2, the subject matter of Example 1, wherein the generating of the fingerprint of the state of the generative model is further based on values of a second intermediate layer of the plurality of layers of neurons.

In Example 3, the subject matter of Examples 1-2, wherein the operations further comprise: causing, for each image in the set of reference images, the generative model to generate an output image that is substantially similar to the image in the set of reference images; determining, for each of the generated output images, a fingerprint based on values of a layer of the neurons of the generative model; and storing the determined fingerprints in a database.

In Example 4, the subject matter of Example 3, wherein the determining that the generative model will generate the image that is similar to the reference image in the set of reference images comprises comparing the generated fingerprint to one or more of the fingerprints in the database.

In Example 5, the subject matter of Examples 1-4, wherein the determining that the generative model will generate the image that is similar to the reference image in the set of reference images comprises providing the generated fingerprint to a trained learning model.

In Example 6, the subject matter of Example 5, wherein the operations further comprise: causing, for each image in the set of reference images, the generative model to generate an output image that is substantially similar to the image in the set of reference images; determining, for each of the generated output images, a fingerprint based on values of a layer of the neurons of the generative model; storing the determined fingerprints in a database; and prior to using the trained learning model to determine that the generative model will generate the image that is similar to the reference image, training the learning model using the determined fingerprints stored in the database.

In Example 7, the subject matter of Examples 1-6, wherein the modifying of the values of the intermediate layer of the plurality of layers of neurons comprises modifying a first vector that represents the values of the intermediate layer during the processing of the prompt based on a second vector that represents the values of the intermediate layer during generation of the reference image.

Example 8 is a method comprising: receiving a prompt from a user; providing, by one or more processors, the prompt to a generative model comprising a plurality of layers of neurons; generating, by the one or more processors, a fingerprint of a state of the generative model in processing the prompt, the state being based on values of an intermediate layer of the plurality of layers of neurons; determining, based on the generated fingerprint, whether the generative model will generate an image that is similar to a reference image in a set of reference images; in response to a determination that the generative model will generate a similar image, determining whether the user has permission to generate the similar image; and in response to a determination that the user does not have permission to generate the similar image, modifying the values of the intermediate layer of the plurality of layers of neurons to cause the generative model to generate a different image.

In Example 9, the subject matter of Example 8, wherein the generating of the fingerprint of the state of the generative model is further based on values of a second intermediate layer of the plurality of layers of neurons.

In Example 10, the subject matter of Examples 8-9 includes causing, for each image in the set of reference images, the generative model to generate an output image that is substantially similar to the image in the set of reference images; determining, for each of the generated output images, a fingerprint based on values of a layer of the neurons of the generative model; and storing the determined fingerprints in a database.

In Example 11, the subject matter of Example 10, wherein the determining that the generative model will generate the image that is similar to the reference image in the set of reference images comprises comparing the generated fingerprint to one or more of the fingerprints in the database.

In Example 12, the subject matter of Examples 8-11, wherein the determining that the generative model will generate the image that is similar to the reference image in the set of reference images comprises providing the generated fingerprint to a trained learning model.

In Example 13, the subject matter of Examples 8-12, wherein the modifying of the values of the intermediate layer of the plurality of layers of neurons comprises modifying a first vector that represents the values of the intermediate layer during the processing of the prompt based on a second vector that represents the values of the intermediate layer during generation of the reference image.

Example 14 is a non-transitory machine-readable medium storing instructions that, when executed by one or more processors, cause the one or more processors to perform operations comprising: receiving a prompt from a user; providing the prompt to a generative model comprising a plurality of layers of neurons; generating a fingerprint of a state of the generative model in processing the prompt, the state being based on values of an intermediate layer of the plurality of layers of neurons; determining, based on the generated fingerprint, whether the generative model will generate an image that is similar to a reference image in a set of reference images; in response to a determination that the generative model will generate a similar image, determining whether the user has permission to generate the similar image; and in response to a determination that the user does not have permission to generate the similar image, modifying the values of the intermediate layer of the plurality of layers of neurons to cause the generative model to generate a different image.

In Example 15, the subject matter of Example 14, wherein the generating of the fingerprint of the state of the generative model is further based on values of a second intermediate layer of the plurality of layers of neurons.

In Example 16, the subject matter of Examples 14-15, wherein the operations further comprise: causing, for each image in the set of reference images, the generative model to generate an output image that is substantially similar to the image in the set of reference images; determining, for each of the generated output images, a fingerprint based on values of a layer of the neurons of the generative model; and storing the determined fingerprints in a database.

In Example 17, the subject matter of Example 16, wherein the determining that the generative model will generate the image that is similar to the reference image in the set of reference images comprises comparing the generated fingerprint to one or more of the fingerprints in the database.

In Example 18, the subject matter of Examples 14-17, wherein the determining that the generative model will generate the image that is similar to the reference image in the set of reference images comprises providing the generated fingerprint to a trained learning model.

In Example 19, the subject matter of Examples 14-18, wherein the determining that the generative model will generate the image that is similar to the reference image in the set of reference images comprises providing the generated fingerprint to a trained learning model.

In Example 20, the subject matter of Examples 14-19, wherein the modifying of the values of the intermediate layer of the plurality of layers of neurons comprises modifying a first vector that represents the values of the intermediate layer during the processing of the prompt based on a second vector that represents the values of the intermediate layer during generation of the reference image.

Example 21 is an apparatus comprising means to implement any of Examples 1-20.

## Claims

1. A system comprising:
one or more processors;
a memory that stores instructions that, when executed by the one or more processors, cause the one or more processors to perform operations comprising:
receiving a prompt from a user;
providing the prompt to a generative model comprising a plurality of layers of neurons;
generating a fingerprint of a state of the generative model in processing the prompt, the state being based on values of an intermediate layer of the plurality of layers of neurons;
determining, based on the generated fingerprint, whether the generative model will generate an image that is similar to a reference image in a set of reference images;
in response to a determination that the generative model will generate a similar image, determining whether the user has permission to generate the similar image; and
in response to a determination that the user does not have permission to generate the similar image, modifying the values of the intermediate layer of the plurality of layers of neurons to cause the generative model to generate a different image.

2. The system of claim 1, wherein the generating of the fingerprint of the state of the generative model is further based on values of a second intermediate layer of the plurality of layers of neurons.

3. The system of claim 1, wherein the operations further comprise:
causing, for each image in the set of reference images, the generative model to generate an output image that is substantially similar to the image in the set of reference images;
determining, for each of the generated output images, a fingerprint based on values of a layer of the neurons of the generative model; and
storing the determined fingerprints in a database.

4. The system of claim 3, wherein the determining that the generative model will generate the image that is similar to the reference image in the set of reference images comprises comparing the generated fingerprint to one or more of the fingerprints in the database.

5. The system of claim 1, wherein the determining that the generative model will generate the image that is similar to the reference image in the set of reference images comprises providing the generated fingerprint to a trained learning model.

6. The system of claim 5, wherein the operations further comprise:
causing, for each image in the set of reference images, the generative model to generate an output image that is substantially similar to the image in the set of reference images;
determining, for each of the generated output images, a fingerprint based on values of a layer of the neurons of the generative model;
storing the determined fingerprints in a database; and
prior to using the trained learning model to determine that the generative model will generate the image that is similar to the reference image, training the learning model using the determined fingerprints stored in the database.

7. The system of claim 1, wherein the modifying of the values of the intermediate layer of the plurality of layers of neurons comprises modifying a first vector that represents the values of the intermediate layer during the processing of the prompt based on a second vector that represents the values of the intermediate layer during generation of the reference image.

8. A method comprising:
receiving a prompt from a user;
providing, by one or more processors, the prompt to a generative model comprising a plurality of layers of neurons;
generating, by the one or more processors, a fingerprint of a state of the generative model in processing the prompt, the state being based on values of an intermediate layer of the plurality of layers of neurons;
determining, based on the generated fingerprint, whether the generative model will generate an image that is similar to a reference image in a set of reference images;
in response to a determination that the generative model will generate a similar image, determining whether the user has permission to generate the similar image; and
in response to a determination that the user does not have permission to generate the similar image, modifying the values of the intermediate layer of the plurality of layers of neurons to cause the generative model to generate a different image.

9. The method of claim 8, wherein the generating of the fingerprint of the state of the generative model is further based on values of a second intermediate layer of the plurality of layers of neurons.

10. The method of claim 8, further comprising:
causing, for each image in the set of reference images, the generative model to generate an output image that is substantially similar to the image in the set of reference images;
determining, for each of the generated output images, a fingerprint based on values of a layer of the neurons of the generative model; and
storing the determined fingerprints in a database.

11. The method of claim 10, wherein the determining that the generative model will generate the image that is similar to the reference image in the set of reference images comprises comparing the generated fingerprint to one or more of the fingerprints in the database.

12. The method of claim 8, wherein the determining that the generative model will generate the image that is similar to the reference image in the set of reference images comprises providing the generated fingerprint to a trained learning model.

13. The method of claim 8, wherein the modifying of the values of the intermediate layer of the plurality of layers of neurons comprises modifying a first vector that represents the values of the intermediate layer during the processing of the prompt based on a second vector that represents the values of the intermediate layer during generation of the reference image.

14. A non-transitory machine-readable medium storing instructions that, when executed by one or more processors, cause the one or more processors to perform operations comprising:
receiving a prompt from a user;
providing the prompt to a generative model comprising a plurality of layers of neurons;
generating a fingerprint of a state of the generative model in processing the prompt, the state being based on values of an intermediate layer of the plurality of layers of neurons;
determining, based on the generated fingerprint, whether the generative model will generate an image that is similar to a reference image in a set of reference images;
in response to a determination that the generative model will generate a similar image, determining whether the user has permission to generate the similar image; and
in response to a determination that the user does not have permission to generate the similar image, modifying the values of the intermediate layer of the plurality of layers of neurons to cause the generative model to generate a different image.

15. The non-transitory machine-readable medium of claim 14, wherein the generating of the fingerprint of the state of the generative model is further based on values of a second intermediate layer of the plurality of layers of neurons.

16. The non-transitory machine-readable medium of claim 14, wherein the operations further comprise:
causing, for each image in the set of reference images, the generative model to generate an output image that is substantially similar to the image in the set of reference images;
determining, for each of the generated output images, a fingerprint based on values of a layer of the neurons of the generative model; and
storing the determined fingerprints in a database.

17. The non-transitory machine-readable medium of claim 16, wherein the determining that the generative model will generate the image that is similar to the reference image in the set of reference images comprises comparing the generated fingerprint to one or more of the fingerprints in the database.

18. The non-transitory machine-readable medium of claim 14, wherein the determining that the generative model will generate the image that is similar to the reference image in the set of reference images comprises providing the generated fingerprint to a trained learning model.

19. The non-transitory machine-readable medium of claim 14, wherein the determining that the generative model will generate the image that is similar to the reference image in the set of reference images comprises providing the generated fingerprint to a trained learning model.

20. The non-transitory machine-readable medium of claim 14, wherein the modifying of the values of the intermediate layer of the plurality of layers of neurons comprises modifying a first vector that represents the values of the intermediate layer during the processing of the prompt based on a second vector that represents the values of the intermediate layer during generation of the reference image.
